# EUROPÄISCHE PATENTSCHRIFT

(11) **EP 2 281 124 B1**
(45) Veröffentlichungstag und Bekanntmachung des Hinweises auf die Patenterteilung: **17.10.2012**
(21) Anmeldenummer: 09757133.5
(22) Anmeldetag: 27.05.2009
(51) Int. Cl.: F16C 11/06

(54) **KUGELGELENK**
BALL JOINT
JOINT A ROTULE

(30) Priorität: 04.06.2008 DE 102008002207
(43) Veröffentlichungstag der Anmeldung: 09.02.2011
(73) Patentinhaber: ZF Friedrichshafen AG, 88038 Friedrichshafen (DE)
(72) Erfinder: ERSOY, Metin, 65396 Walluf (DE)
(86) Internationale Anmeldenummer: PCT/DE2009/050029
(87) Internationale Veröffentlichungsnummer: WO 2009/146699

(56) Entgegenhaltungen:
- WO-A-2005/051594
- DE-A1- 4 224 895
- US-A- 2 687 024
- US-A- 2 964 964
- US-A- 4 921 271

## Beschreibung

Die Erfindung betrifft ein Kugelgelenk mit einem eine Zapfenöffnung aufweisenden Gehäuse und einem eine Gelenkkugel aufweisenden Kugelzapfen, der mittels der Gelenkkugel bewegbar in dem Gehäuse gelagert ist und sich durch die Zapfenöffnung hindurch aus dem Gehäuse heraus erstreckt, wobei die Gelenkkugel (2) eine nicht ebene Regelfläche (7) aufweist, die mit einer an dem Gehäuse (4) vorgesehenen Anlage (8) in Kontakt steht.

Die US 2 964 964 A und die US 2 687 024 A offenbaren ein Kugelgelenk mit einem Gehäuse, einem eine Gelenkkugel aufweisenden Kugelzapfen, der mittels der Gelenkkugel bewegbar in dem Gehäuse gelagert ist, welches einen Bolzen trägt, der sich durch ein in der Gelenkkugel vorgesehenes Loch hindurch erstreckt.

Die DE 42 24 895 A1 offenbart ein Kugelgelenk mit einem Gelenkzapfen, der mit einem eine sphärische Lagerfläche aufweisenden Gelenkkopf in einer Ausnehmung eines napfartigen Gelenkgehäuses verdrehbar und auslenkbar gelagert ist und mit einer einen am Gehäuseboden vorgesehenen Anschlag und einen am Gelenkkopf koaxial zur Achse des Gelenkzapfens vorgesehenen Gegenanschlag umfassenden Anschlagvorrichtung zur Begrenzung von Gelenkzapfen-Auslenkbewegungen, wobei der gehäusefeste Anschlag rotationssymmetrisch und in der Konstruktionslage des Gelenkzapfens zu dessen Achse koaxial angeordnet ist. Ferner sind Anschlag und Gegenanschlag in der Konstruktionslage des Kugelgelenkes in Achsrichtung des Gelenkzapfens im Abstand voneinander angeordnet.

Häufig besteht der Bedarf an einem Gelenk, mit dem eine Taumelbewegung erzielbar ist, insbesondere eine räumlich taumelnde Laufbahn mit nur einem Freiheitsgrad. Hierzu bietet sich ein Kugelgelenk mit seinen drei Drehfreiheitsgraden an, von denen jedoch zwei gezielt aufgehoben werden müssen. Zur Erzielung einer Taumelbewegung kann z.B. ein Kugelgelenk eingesetzt werden, in dessen Gelenkkugel oberflächlich zwei voneinander unabhängige Nuten vorgesehen sind, in die zwei am Gelenkgehäuse gelagerte und feststehende Stifte oder Rollen eingreifen. Diese zwingen die Gelenkkugel bei einer Bewegung auf eine vorgegebene Laufbahn, sodass es möglich ist, ein mit der Gelenkkugel verbundenes Teil einer gewünschten räumlichen Bewegung zu unterziehen.

Diese Lösung ist jedoch sehr kostenaufwendig, da sowohl die Ausbildung der Nuten durch Fräsen und gegebenenfalls Schleifen als auch die Fertigung und Montage der Führungsfinger teuer ist. Ferner erfordert die doppelte Zwangsführung hohe Fertigungstoleranzen.

Ausgehend hiervon liegt der Erfindung die Aufgabe zugrunde, eine Möglichkeit zur Zwangsführung eines Kugelzapfens eines Kugelgelenks zu schaffen, die insbesondere im Hinblick auf die Massenproduktion kostengünstig ist.

Diese Aufgabe wird erfindungsgemäß mit einem Kugelgelenk nach Anspruch 1 gelöst. Bevorzugte Weiterbildungen der Erfindung sind in den Unteransprüchen gegeben.

Das erfindungsgemäße Kugelgelenk, insbesondere für ein Fahrzeug, weist ein mit einer Zapfenöffnung versehenes Gehäuse und einen eine Gelenkkugel umfassenden Kugelzapfen auf, der mittels der Gelenkkugel bewegbar, insbesondere drehbar und schwenkbar, in dem Gehäuse gelagert ist und sich durch die Zapfenöffnung hindurch aus dem Gehäuse heraus erstreckt, wobei die Gelenkkugel eine nicht ebene Regelfläche aufweist, die mit einer an dem Gehäuse vorgesehenen Anlage in Kontakt steht, und wobei durch das Zusammenwirken von Regelfläche und Anlage eine Zwangsführung erzielt wird, die den Kugelzapfen bei einer Verdrehung um seine Längsachse zu einer seitlichen Auslenkung zwingt.

Durch das Zusammenwirken von Regelfläche und Anlage wird eine Zwangsführung des Kugelzapfens erzielt, die eine Beschränkung der Bewegungsfreiheit des Kugelzapfens bewirkt. Die Formgebung der Regelfläche definiert eine räumliche Bewegungsbahn, entlang welcher sich der Kugelzapfen bewegt oder bewegen kann, wenn der Kugelzapfen um seine Längsachse dreht oder gedreht wird. Über die Formgebung der Regelfläche wird insbesondere eine Abhängigkeit zwischen einer Verdrehung des Kugelzapfens um seine Längsachse und einer seitlichen Auslenkung des Kugelzapfens um wenigstens eine andere Achse (Schwenkachse) geschaffen, die schräg oder senkrecht zu der Längsachsachse des Kugelzapfens ausgerichtet ist. Bevorzugt schneidet die wenigstens eine Schwenkachse die Längsachse des Kugelgelenks, wobei der Schnittpunkt vorzugsweise im Zentrum der Gelenkkugel liegt. Die Herstellung der Regelfläche erfolgt z.B. durch Kaltpressen, was bei großen Stückzahlen sehr kostengünstig möglich ist. Unter einer Regelfläche wird mathematisch insbesondere eine Fläche verstanden, die durch Bewegung einer Geraden im Raum erzeugt werden kann (siehe I.N. Bronstein und K.A. Semendjajew, Taschenbuch der Mathematik, 25. Auflage 1991, B. G. Teubner Verlagsgesellschaft, Stuttgart, Seite 605).

Eine ergänzende Beschränkung der Bewegungsfreiheit des Kugelzapfens oder eine ergänzende Zwangsführung des Kugelzapfens kann durch eine zusätzliche Führung erfolgen, mittels welcher der Kugelzapfen geführt wird, insbesondere auf eine vorgegebene Bewegungsbahn gezwungen wird. Die zusätzliche Führung beschränkt insbesondere die möglichen seitlichen Auslenkungen des Kugelzapfens und kann z.B. von einer Kulisse gebildet sein, durch welche sich der Kugelzapfen hindurch erstreckt. Bevorzugt ist die zusätzliche Führung durch die Zapfenöffnung gebildet. Die zusätzliche Führung oder Zapfenöffnung ist vorzugsweise länglich, insbesondere oval ausgebildet, was relativ kostengünstig umsetzbar ist. Durch die Zapfenöffnung und durch das Zusammenwirken von Regelfläche und Anlage werden die Bewegungsmöglichkeiten des Kugelzapfens bevorzugt auf eine räumliche Bewegungsbahn beschränkt, insbesondere zur Ausführung einer Taumelbewegung.

Der Kugelzapfen weist bevorzugt einen mit der Gelenkkugel fest verbundenen Zapfen auf, wobei die Regelfläche z.B. an der dem Zapfen abgewandten Seite der Gelenkkugel vorgesehen ist. Insbesondere bildet die Regelfläche eine dem Zapfen gegenüberliegende Stirnfläche oder Stirnseite des Kugelzapfens. Vorzugsweise ist die Regelfläche näherungsweise senkrecht zu der Längsachse des Kugelzapfens ausgerichtet, wobei der Begriff "näherungsweise" berücksichtigt, dass die Regelfläche nicht eben ist. Gemäß einer Ausgestaltung ist die Gelenkkugel bei etwa 2/3 ihrer Höhe mit einer Abflachung versehen, an der die Regelfläche ausgebildet ist. Vor der Ausbildung der Regelfläche ist die Abflachung bevorzugt eben und senkrecht zur Längsachse des Kugelzapfens ausgerichtet. Die Regelfläche weist insbesondere eine umlaufende Berandung auf, welche die Mittellängsachse des Kugelzapfens vorzugsweise umgibt oder umringt.

Zwischen dem Gehäuse und dem Kugelzapfen ist vorzugsweise ein Schutz- oder Dichtungsbalg angeordnet, der ein Eindringen von Verschmutzungen und Feuchtigkeit in das Innere des Kugelgelenks verhindert. Der Zapfen des Kugelzapfens ist insbesondere als Gewindezapfen ausgebildet.

Der Kontaktbereich zwischen Regelfläche und Anlage ist bevorzugt linienförmig und liegt insbesondere auf einer Geraden. Somit ist eine optimale Führung des Kugelzapfens möglich, da die Regelfläche in mathematischer Hinsicht ja durch die Bewegung einer Geraden im Raum erzeugt werden kann. Vorzugsweise ist die Anlage fest mit dem Gehäuse verbunden und/oder an diesem gelagert. Gemäß einer Weiterbildung ist die Anlage als in dem Gehäuse gelagerter Stift ausgebildet. Vorzugsweise steht die Mantelfläche der Anlage entlang einer Geraden oder Mantelgeraden mit der Regelfläche in Kontakt. Die Anlage ist insbesondere drehbar an dem Gehäuse gelagert, sodass die Reibung reduziert werden kann. Die drehbare Lagerung kann z.B. mittels wenigstens einer Nadellagerbuchse erfolgen. Ferner ist die Anlage insbesondere um ihre Längsachse drehbar an dem Gehäuse gelagert.

Gemäß einer Ausgestaltung weist das Kugelgelenk einen Verriegelungsmechanismus auf, mittels welchem der Kugelzapfen in Endlagen seiner Bewegungsbahn verriegelt wird oder werden kann. Insbesondere weist die Gelenkkugel dafür wenigstens eine Querbohrung auf, in der wenigstens eine Rastkugel bewegbar geführt ist, die in eine im Gehäuse vorgesehene Rastausnehmung eingreift oder eingreifen kann. Greift die Rastkugel in die Rastausnehmung ein, so ist die Gelenkkugel am Gehäuse verriegelt. Die Rastkugel ist vorzugsweise mittels einer Feder vorgespannt, insbesondere in Richtung Gehäuse oder Rastausnehmung, sodass ein Verrasten bei Erreichen der Endlage automatisch erfolgt.

Gemäß einer Weiterbildung ist in dem Kugelzapfen eine bevorzugt schräg oder senkrecht zu der Querbohrung ausgerichtete Längsbohrung vorgesehen, in der ein Entriegelungsstift federnd gelagert ist, der die Rastkugel in die Rastausnehmung drückt oder drücken kann. Durch Bewegen des Entriegelungsstifts gegen die Federkraft, kann die Vorspannung der Rastkugel in Richtung auf die Rastausnehmung aufgehoben werden, sodass die Gelenkkugel freigegeben ist und der Kugelzapfen aus der Endlage herausbewegt werden kann.

Die Zwangsführung des Kugelzapfens wird somit nicht durch Nuten an der Kugelfläche der Gelenkkugel, sondern erfindungsgemäß durch eine Regelfläche erzielt, die insbesondere an der Kugelstirnfläche dem Zapfen gegenüberliegend vorgesehen ist. Bevorzugt wird die Polarseite der Kugel bei ca. 2/3 der Kugelhöhe abgeflacht, wobei an dieser Abflachung die Regelfläche ausgebildet wird. Die Regelfläche zwingt den Kugelzapfen bei einer Drehung zum seitlichen Schwenken. Als Gegenseite bzw. Anlage für die Regelfläche kann ein Stift verwendet werden, der im Gehäuse gelagert ist und mit nur einer seiner Mantelgeraden mit der Gelenkkugel in Kontakt steht. Somit wird insbesondere ein Schwenken der Gelenkkugel senkrecht zur Stiftachse verhindert. Um die Reibung zu reduzieren, kann der Stift ferner mit Nadellagerbüchsen im Gehäuse gelagert sein. Vorzugsweise übernimmt eine ovale Gehäuseöffnung eine zweite oder zusätzliche Führung des Kugelzapfens.

Gemäß einer Weiterbildung kann das Kugelgelenk um einen Verriegelungsmechanismus ergänzt sein, sodass der Kugelzapfen in Endlagen seiner Taumelbewegungsbahn arretiert werden kann. Dies ist beispielsweise durch Querbohrungen in der Gelenkkugel möglich, in die kleine Rastkugeln eingebracht sind, die durch einen federbelasteten Entriegelungsstift radial vorgespannt sind, der in einer Längsbohrung im Kugelzapfen sitzt, die entlang der Mittellinie des Kugelzapfens verläuft und insbesondere senkrecht zu den Querbohrungen ausgerichtet ist. Wenn sich die Rastkugelmitte zwischen der Oberfläche der Gelenkkugel und der Gehäuseinnenfläche befindet, ist der Kugelzapfen verriegelt. Zur Entriegelung des Kugelzapfens kann der Entriegelungsstift gegen die Federkraft in eine freigebende Position bewegt werden, z.B. mittels eines Knopfes, eines Seilzugs, eines Elektromotors, eines Hydraulikzylinders und/oder eines Pneumatikzylinders.

Die Erfindung betrifft ferner die Verwendung eines erfindungsgemäßen Kugelgelenks zum Ausführen einer Bewegung, insbesondere einer Taumelbewegung, eines Fahrzeugteils relativ zum Fahrzeugaufbau eines Fahrzeugs.

Die Erfindung wird nachfolgend anhand einer bevorzugten Ausführungsform unter Bezugnahme auf die Zeichnung beschrieben. In der Zeichnung zeigen:
- Fig. 1:: eine perspektivische und teilweise geschnittene Darstellung eines Kugelgelenks gemäß einer Ausführungsform der Erfindung,
- Fig. 2:: eine Schnittansicht des Kugelgelenks in einer 0°- Position des Kugelzapfens,
- Fig. 3:: eine Schnittansicht des Kugelgelenks in einer 30°-Position des Kugelzapfens,
- Fig. 4:: eine Schnittansicht des Kugelgelenks in einer 60°-Position des Kugelzapfens,
- Fig. 5:: eine Schnittansicht des Kugelgelenks in einer 90°-Position des Kugelzapfens,
- Fig. 6:: eine Schnittansicht des Kugelgelenks in einer 120°-Position des Kugelzapfens,
- Fig. 7:: eine Schnittansicht des Kugelgelenks in einer 150°-Position des Kugelzapfens und
- Fig. 8:: eine Schnittansicht des Kugelgelenks in einer 180°-Position des Kugelzapfens.

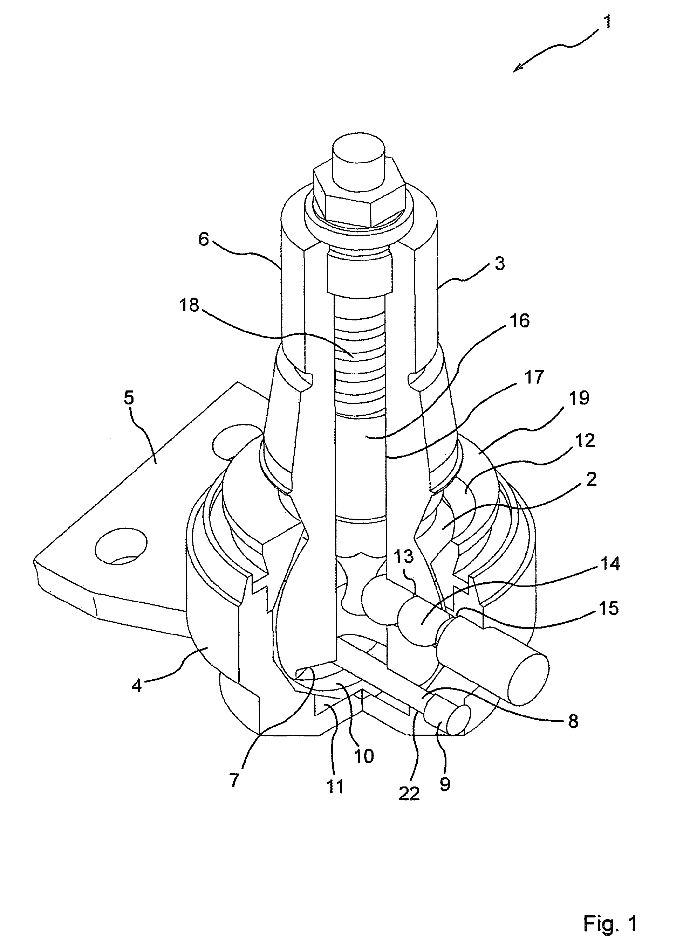

Aus Fig. 1 ist eine teilweise aufgeschnittene, perspektivische Darstellung eines Kugelgelenks 1 gemäß einer Ausführungsform der Erfindung ersichtlich, wobei ein mit einer Gelenkkugel 2 versehener Kugelzapfen 3 mit seiner Gelenkkugel 2 in einem Kugelgelenkgehäuse 4 drehbar und schwenkbar gelagert ist. An dem Gehäuse 4 ist ein Flansch 5 vorgesehen, mittels welchem das Gehäuse 4 an einem Fahrzeugteil befestigt werden kann. Ferner kann der Kugelzapfen an einer Fahrzeugkarosserie befestigt werden, sodass das Fahrzeugteil relativ zu der Karosserie bewegt werden kann.

Der Kugelzapfen 3 weist einen fest mit der Gelenkkugel 2 verbundenen Gewindezapfen 6 auf und erstreckt sich aus dem Gehäuse 4 heraus. An der Gelenkkugel 2 ist an ihrer dem Zapfen 6 abgewandten Seite eine Regelfläche 7 vorgesehen, die eine Stirnfläche des Kugelzapfens 3 bildet. Die Regelfläche ist nicht eben und liegt an einem Zwangsführungsstift 8 an, der in einer im Gehäuse 4 vorgesehenen Bohrung 22 einliegt und mittels Nadellagerbuchsen 9 um seine Längsachse drehbar an dem Gehäuse 4 gelagert ist. Der Kugelzapfen 3 ist in üblicher Weise unter Zwischenschaltung einer Kugelschale 10 in einem Innenraum 11 des Gehäuses 4 gelagert, der über eine oval ausgebildete Zapfenöffnung 12 zugänglich ist, durch welches sich der Kugelzapfen 3 hindurcherstreckt. Das Gehäuse 4 umfasst einen Verschlussring 19, in dem die Gehäuseöffnung 12 vorgesehen ist. Der Kugelzapfen 3 wird durch das Zusammenwirken von Regelfläche 7 und Stift 8 einerseits und durch die ovale Gehäuseöffnung 12 andererseits derart zwangsgeführt, dass er sich relativ zu dem Gehäuse 4 lediglich entlang einer vordefinierten Bewegungsbahn bewegen kann, die eine Taumelbewegung des Kugelzapfens bewirkt.

Der Kugelzapfen 3 kann in bestimmten Lagen an dem Gehäuse 4 verrastet werden, wofür ein Verriegelungsmachanismus vorgesehen ist, der mehrere in im Innern der Gelenkkugel 2 vorgesehenen Querbohrungen 13 angeordnete Rastkugeln 14 umfasst, die sich entlang der Querbohrungen 13 bewegen und in an der den Innenraum 11 begrenzenden Innenwandung des Gehäuses 4 vorgesehene Rastausnehmungen 15 eingreifen können. Dabei ist der Kugelzapfen 3 an dem Gehäuse 4 verrastet, wenn die Rastkugeln 14 in die Rastausnehmungen 15 eingreifen. Die Rastkugeln 14 werden mittels eines Entriegelungsstifts 16 radial nach außen in Richtung Rastausnehmungen 15 gedrückt, wobei der Entriegelungsstift 16 in einer im Kugelzapfen 3 vorgesehenen Längsbohrung 17 verschiebbar geführt und mittels einer Feder 18 axial in Richtung Gelenkkugel 2 vorgespannt ist. Im unbetätigten Zustand drückt der Entriegelungsstift 16 somit die Rastkugel 14 radial nach außen in Richtung Gehäuseinnenwandung. Zum Entriegeln des Kugelzapfens 3 kann der Entriegelungsstift 16 gegen die Kraft der Feder 18 axial von der Gelenkkugel 2 wegbewegt werden, sodass die Rastkugeln 14 sich entlang der Querbohrungen 13 ins Innere des Kugelzapfens 3 hineinbewegen und somit die Verriegelung aufheben können. Der entriegelte Zustand ist aus Fig. 1 ersichtlich. Am Ort der Rastausnehmungen 15 weist die Kugelschale 10 Löcher auf, durch welche hindurch die Rastkugeln 14 in die Rastausnehmungen 15 eingreifen können.

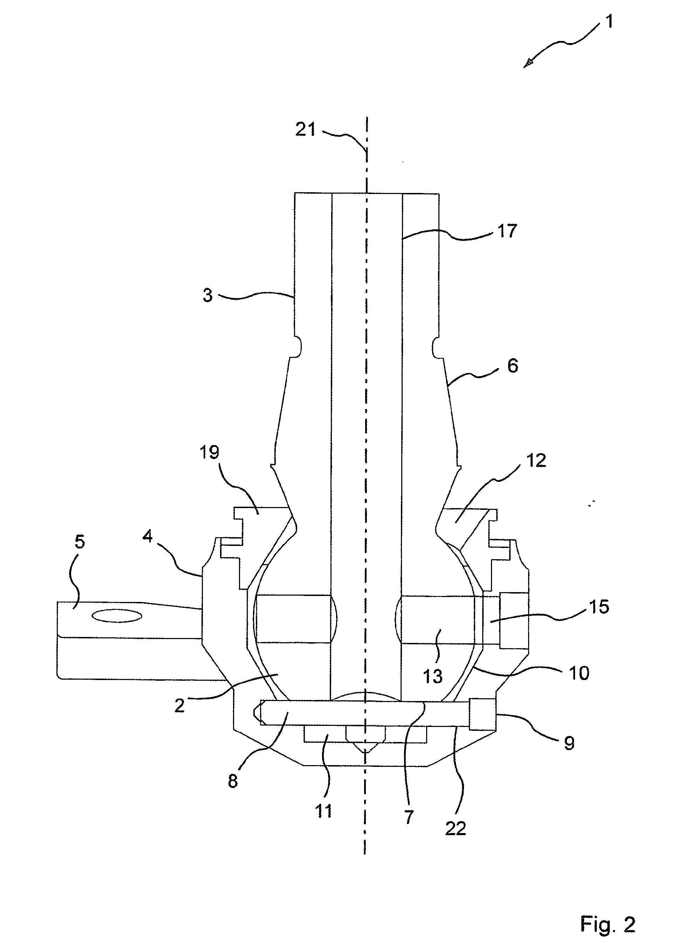

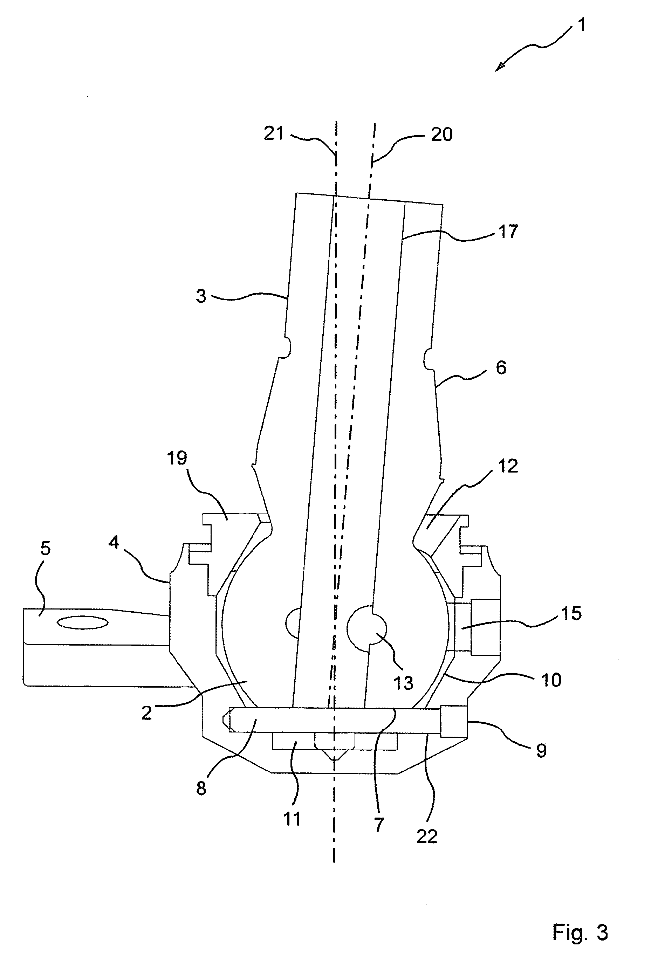

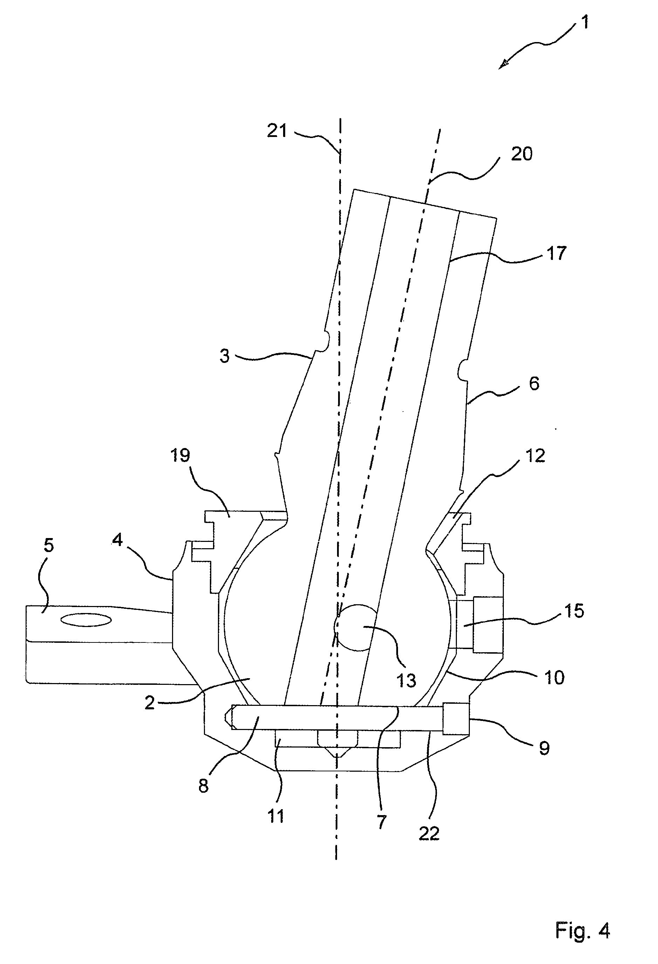

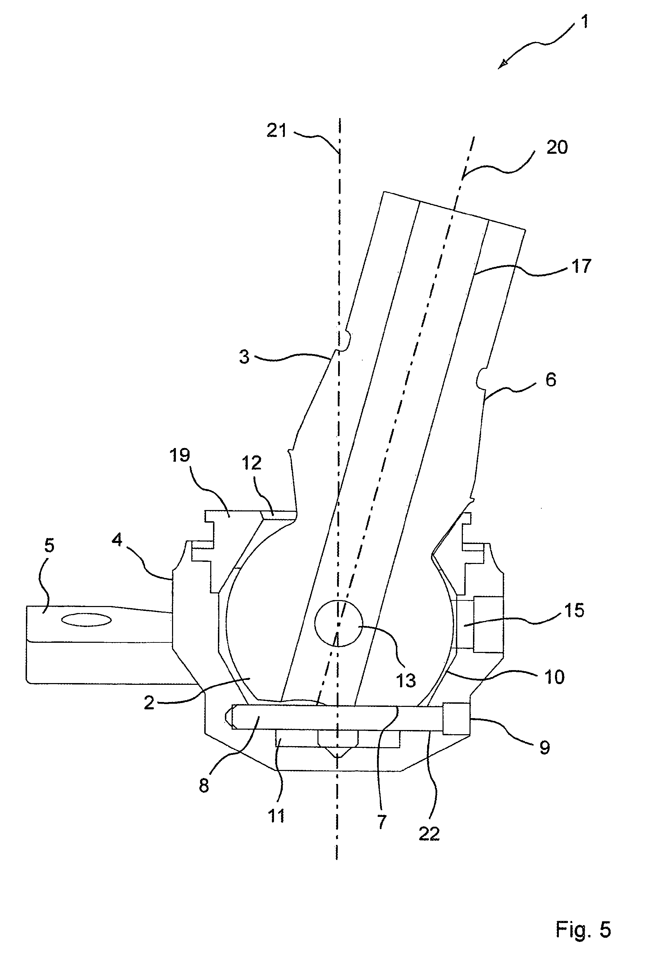

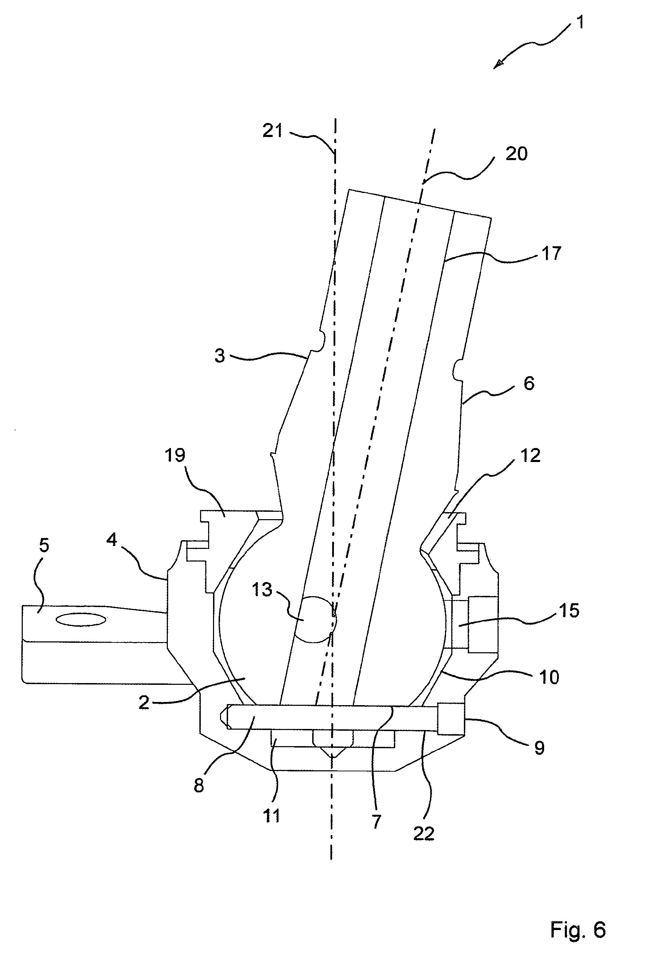

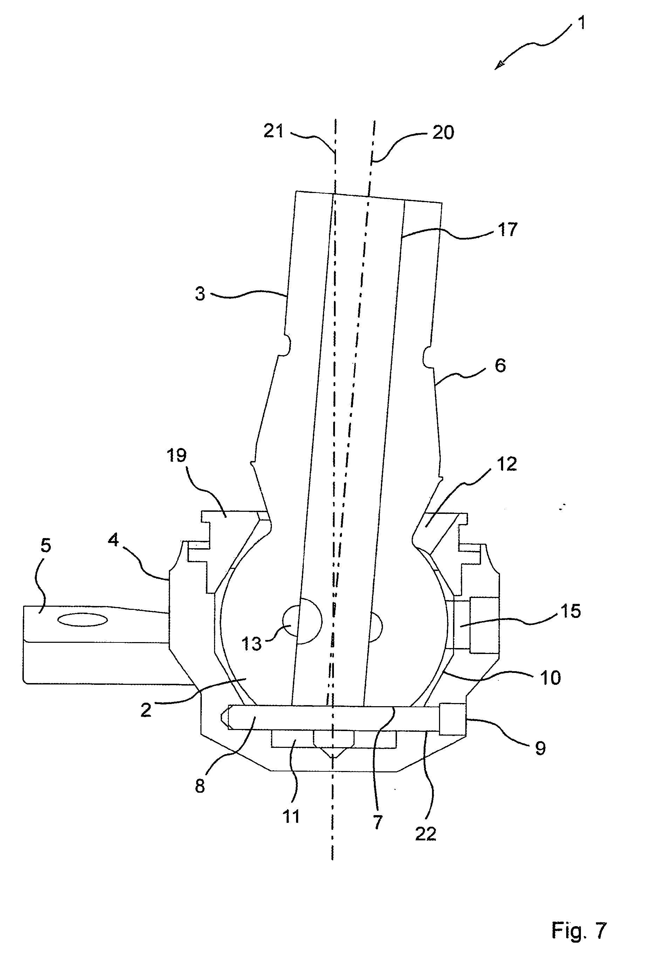

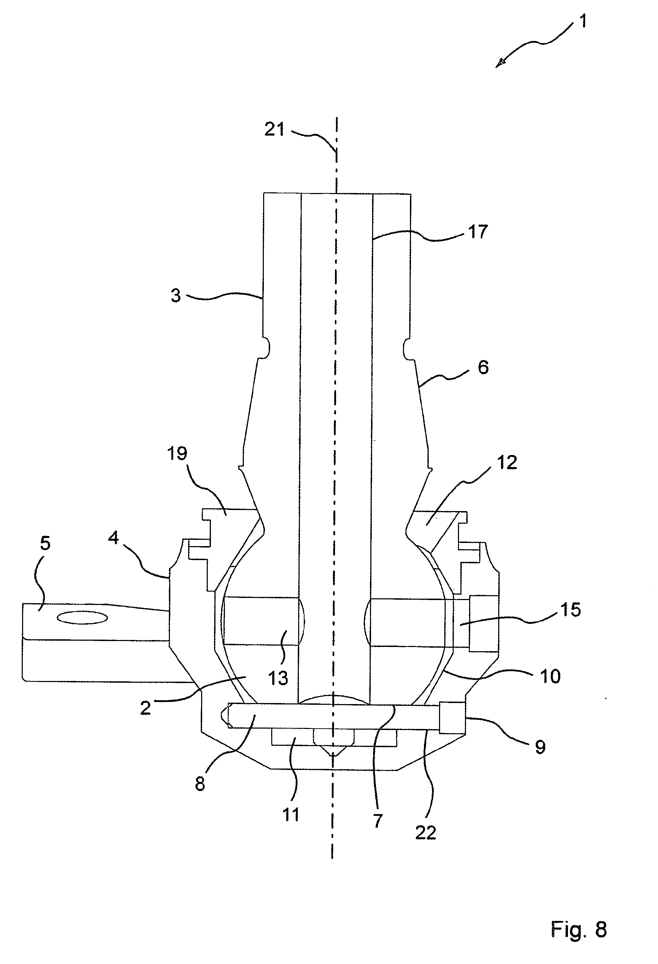

Aus den Fig. 2 bis 8 sind Schnittansichten des Kugelgelenks 1 ersichtlich, wobei der Verriegelungsmechanismus der Übersichtlichkeit halber weggelassen worden ist. In den Fig. 2 bis 8 ist der Kugelzapfen 3 in unterschiedlichen Positionen seiner Bewegungsbahn dargestellt, wobei in Fig. 2 der Kugelzapfen 3 um einen Winkel von 0° um seine Längsachse 20 relativ zu dem Gehäuse 4 verdreht ist. Die Längsachse 20 des Kugelzapfens 3 fällt in Fig. 2, zumindest nährungsweise, mit der Längsachse 21 des Gehäuses 4 oder Gelenks 1 zusammen, sodass lediglich die Längsachse 21 dargestellt ist. Entsprechendes gilt für Fig. 8. In Fig. 3 beträgt der Verdrehwinkel, um den der Kugelzapfen 3 um seine Längsachse 20 verdreht ist, 30°, in Fig. 4 60°, in Fig. 5 90°, in Fig. 6 120°, in Fig. 7 150° und in Fig. 8 180°. Gemäß der Fig. 2 bis 8 rotiert somit der Kugelzapfen 3 um seine Längsachse 20 in Schritten von 30°. Dabei ist zu erkennen, das der Kugelzapfen 3 in den Fig. 3 bis 7 seitlich ausgelenkt ist, wobei die Auslenkung durch den Winkel zwischen den beiden Längsachsen 20 und 21 beschrieben wird. Wegen des Zusammenwirkens von Regelfläche 7 und Stift 8 sowie wegen der Führung durch die Zapfenöffnung 12 ist die Abhängigkeit zwischen Verdrehwinkel und Auslenkung fest vorgegeben. Die Zapfenöffnung 12 legt hierbei die Richtung der Auslenkung fest, wohingegen das Zusammenwirken von Regelfläche 7 und Stift 8 jeder Auslenkung einen definierten Verdrehwinkel zuordnet.

### Bezugszeichenliste

- 1: Kugelgelenk
- 2: Gelenkkugel
- 3: Kugelzapfen
- 4: Gehäuse
- 5: Flansch
- 6: Gewindezapfen
- 7: Regelfläche
- 8: Zwangsführungsstift
- 9: Nadellagerbuchse
- 10: Kugelschale / Lagerschale
- 11: Innenraum
- 12: Zapfenöffnung
- 13: Querbohrung
- 14: Rastkugel
- 15: Rastausnehmung
- 16: Entriegelungsstift
- 17: Längsbohrung
- 18: Feder
- 19: Verschlussring
- 20: Längsachse des Kugelzapfens / Mittellängsachse
- 21: Längsachse des Gehäuses
- 22: Gehäusebohrung

## Patentansprüche

1. Kugelgelenk mit
einem eine Zapfenöffnung (12) aufweisenden Gehäuse (4),
einem eine Gelenkkugel (2) aufweisenden Kugelzapfen (3), der mittels der Gelenkkugel (2) bewegbar in dem Gehäuse (4) gelagert ist und sich durch die Zapfenöffnung (12) hindurch aus dem Gehäuse (4) heraus erstreckt, wobei die Gelenkkugel (2) eine nicht ebene Regelfläche (7) aufweist, die mit einer an dem Gehäuse (4) vorgesehenen Anlage (8) in Kontakt steht, **dadurch gekennzeichnet, dass** durch das Zusammenwirken von Regelfläche (7) und Anlage (8) eine Zwangsführung erzielt wird, die den Kugelzapfen (3) bei einer Verdrehung um seine Längsachse (20) zu einer seitlichen Auslenkung zwingt.

2. Kugelgelenk nach Anspruch 1,
**dadurch gekennzeichnet, dass** die Anlage fest mit dem Gehäuse verbunden und/oder an diesem gelagert ist.

3. Kugelgelenk nach Anspruch 1 oder 2,
**dadurch gekennzeichnet, dass** der Kontaktbereich zwischen Regelfläche (7) und Anlage (8) linienförmig ausgebildet ist und auf einer Geraden liegt.

4. Kugelgelenk nach einem der vorangehenden Ansprüche,
**dadurch gekennzeichnet, dass** der Kugelzapfen (3) einen mit der Gelenkkugel (2) fest verbundenen Zapfen (6) aufweist und die Regelfläche (7) eine dem Zapfen (6) gegenüberliegende Stirnfläche des Kugelzapfens (3) bildet.

5. Kugelgelenk nach einem der vorangehenden Ansprüche,
**dadurch gekennzeichnet, dass** die Regelfläche (7) näherungsweise senkrecht zur Längsachse (20) des Kugelzapfens (3) ausgerichtet ist.

6. Kugelgelenk nach einem der vorangehenden Ansprüche,
**dadurch gekennzeichnet, dass** die Gelenkkugel (2) bei etwa 2/3 ihrer Höhe mit einer Abflachung versehen ist, an der die Regelfläche (7) ausgebildet ist.

7. Kugelgelenk nach einem der vorangehenden Ansprüche,
**dadurch gekennzeichnet, dass** die Regelfläche (7) durch Kaltpressen hergestellt ist.

8. Kugelgelenk nach einem der vorangehenden Ansprüche,
**dadurch gekennzeichnet, dass** die Anlage (8) als in dem Gehäuse (4) gelagerter Stift ausgebildet ist, dessen Mantelfläche entlang einer Geraden mit der Regelfläche (7) in Kontakt steht.

9. Kugelgelenk nach Anspruch 8,
**dadurch gekennzeichnet, dass** der Stift (8) um seine Längsachse drehbar an dem Gehäuse (4) gelagert ist.

10. Kugelgelenk nach Anspruch 8 oder 9,
**dadurch gekennzeichnet, dass** der Stift (8) mittels wenigstens einer Nadellagerbuchse (9) drehbar an dem Gehäuse (4) gelagert ist.

11. Kugelgelenk nach einem der vorangehenden Ansprüche,
**dadurch gekennzeichnet, dass** eine zusätzliche Führung vorgesehen ist, welche die seitlichen Auslenkungsmöglichkeiten des Kugelzapfens (3) beschränkt.

12. Kugelgelenk nach Anspruch 11,
**dadurch gekennzeichnet, dass** die Zapfenöffnung (12) oval ausgebildet ist und die zusätzlich Führung für den Kugelzapfen (3) bildet.

13. Kugelgelenk nach einem der vorangehenden Ansprüche,
**gekennzeichnet durch** einen Verriegelungsmechanismus, mittels welchem der Kugelzapfen (3) in Endlagen seiner Bewegungsbahn verriegelt wird oder werden kann.

14. Kugelgelenk nach einem der vorangehenden Ansprüche,
**dadurch gekennzeichnet, dass** die Gelenkkugel (2) wenigstens eine Querbohrung (13) aufweist, in der wenigstens eine Rastkugel (14) bewegbar geführt ist, die in eine Rastausnehmung (15) im Gehäuse (4) eingreift oder eingreifen kann.

15. Kugelgelenk nach Anspruch 14,
**dadurch gekennzeichnet, dass** in dem Kugelzapfen (2) eine senkrecht zu der Querbohrung (13) ausgerichtete Längsbohrung (17) vorgesehen ist, in der ein Entriegelungsstift (16) federnd gelagert ist, der die Rastkugel (14) in die Rastausnehmung (15) drückt oder drücken kann.

16. Kugelgelenk nach einem der Ansprüche 13 bis 15,
**dadurch gekennzeichnet, dass** eine Entriegelung des Kugelzapfens mittels eines Knopfes, eines Seilzugs, einer Pneumatik, einer Hydraulik oder eines Elektromotors erfolgen kann.

## Claims

1. Ball joint comprising a housing (4) which has a stud opening (12), and a ball stud (3) which has a joint ball (2), is movably mounted in the housing (4) by means of the joint ball (2) and extends out of the housing (4) through the stud opening (12), wherein the joint ball (2) has a non-planar control surface (7) which is in contact with an abutment (8) provided on the housing (4), **characterized in that** the interaction between control surface (7) and abutment (8) achieves a positive guidance which forces the ball stud (3) to deflect laterally during a rotation about its longitudinal axis (20).

2. Ball joint according to Claim 1, **characterized in that** the abutment is fixedly connected to the housing and/or mounted thereon.

3. Ball joint according to Claim 1 or 2, **characterized in that** the contact region between control surface (7) and abutment (8) is designed to be linear and lies on a straight line.

4. Ball joint according to one of the preceding claims, **characterized in that** the ball stud (3) comprises a stud (6) fixedly connected to the joint ball (2), and the control surface (7) forms an end face of the ball stud (3) that is situated oppositely to the stud (6).

5. Ball joint according to one of the preceding claims, **characterized in that** the control surface (7) is oriented approximately perpendicularly to the longitudinal axis (20) of the ball stud (3).

6. Ball joint according to one of the preceding claims, **characterized in that** the joint ball (2) is provided, at approximately 2/3 of its height, with a flattened portion on which the control surface (7) is formed.

7. Ball joint according to one of the preceding claims, **characterized in that** the control surface (7) is produced by cold pressing.

8. Ball joint according to one of the preceding claims, **characterized in that** the abutment (8) is designed as a pin which is mounted in the housing (4) and whose lateral surface is in contact with the control surface (7) along a straight line.

9. Ball joint according to Claim 8, **characterized in that** the pin (8) is mounted on the housing (4) so as to be rotatable about its longitudinal axis.

10. Ball joint according to Claim 8 or 9, **characterized in that** the pin (8) is rotatably mounted on the housing (4) by means of at least one needle bearing bushing (9).

11. Ball joint according to one of the preceding claims, **characterized in that** an additional guide is provided which limits the lateral deflection possibilities of the ball stud (3).

12. Ball joint according to Claim 11, **characterized in that** the stud opening (12) is of oval design and forms the additional guide for the ball stud (3).

13. Ball joint according to one of the preceding claims, **characterized by** a locking mechanism by means of which the ball stud (3) is or can be locked in end positions of its movement path.

14. Ball joint according to one of the preceding claims, **characterized in that** the joint ball (2) has at least one transverse bore (13) in which there is movably guided at least one latching ball (14) which engages or can engage in a latching recess (15) in the housing (4).

15. Ball joint according to Claim 14, **characterized in that** a longitudinal bore (17) oriented perpendicularly to the transverse bore (13) is provided in the ball stud (3) and has an unlocking pin (16) spring-mounted therein which presses or can press the latching ball (14) into the latching recess (15).

16. Ball joint according to one of Claims 13 to 15, **characterized in that** an unlocking of the ball stud can take place by means of a button, a control cable, a pneumatic device, a hydraulic device or an electric motor.

## Revendications

1. Joint à rotule comprenant
un boîtier (4) présentant une ouverture de tourillon (12),
un tourillon sphérique (3) présentant une rotule d'articulation (2), lequel tourillon est monté de manière déplaçable au moyen de la rotule d'articulation (2) dans le boîtier (4) et s'étend à travers l'ouverture de tourillon (12) hors du boîtier (4),
la rotule d'articulation (2) présentant une surface de réglage non plane (7) qui est en contact avec une butée (8) prévue sur le boîtier (4),
**caractérisé en ce que** par coopération entre la surface de réglage (7) et la butée (8), il se produit un guidage forcé qui force le tourillon sphérique (3) à dévier latéralement en cas de rotation autour de son axe longitudinal (20).

2. Joint à rotule selon la revendication 1, **caractérisé en ce que** la butée est connectée fixement au boîtier et/ou est montée fixement sur celui-ci.

3. Joint à rotule selon la revendication 1 ou 2, **caractérisé en ce que** la région de contact entre la surface de réglage (7) et la butée (8) est réalisée sous forme linéaire et se situe sur une droite.

4. Joint à rotule selon l'une quelconque des revendications précédentes,
**caractérisé en ce que** le tourillon sphérique (3) présente un tourillon (6) connecté fixement à la rotule d'articulation (2) et la surface de réglage (7) forme une surface frontale du tourillon sphérique (3) opposée au tourillon (6).

5. Joint à rotule selon l'une quelconque des revendications précédentes,
**caractérisé en ce que** la surface de réglage (7) est orientée approximativement perpendiculairement à l'axe longitudinal (20) du tourillon sphérique (3).

6. Joint à rotule selon l'une quelconque des revendications précédentes,
**caractérisé en ce que** la rotule d'articulation (2) est pourvue sur environ 2/3 de sa hauteur d'un aplatissement sur lequel est réalisée la surface de réglage (7).

7. Joint à rotule selon l'une quelconque des revendications précédentes,
**caractérisé en ce que** la surface de réglage (7) est fabriquée par pressage à froid.

8. Joint à rotule selon l'une quelconque des revendications précédentes,
**caractérisé en ce que** la butée (8) est réalisée sous forme de goupille montée dans le boîtier (4), dont la surface d'enveloppe est en contact le long d'une droite avec la surface de réglage (7).

9. Joint à rotule selon la revendication 8,
**caractérisé en ce que** la goupille (8) est montée sur le boîtier (4) de manière à pouvoir tourner autour de son axe longitudinal.

10. Joint à rotule selon la revendication 8 ou 9,
**caractérisé en ce que** la goupille (8) est montée sur le boîtier (4) de manière à pouvoir tourner au moyen d'au moins une douille de palier à aiguilles (9).

11. Joint à rotule selon l'une quelconque des revendications précédentes,
**caractérisé en ce qu**'il est prévu un guide supplémentaire qui limite les possibilités de déviation latérale du tourillon sphérique (3).

12. Joint à rotule selon la revendication 11,
**caractérisé en ce que l**'ouverture de tourillon (12) est réalisée sous forme ovale et forme le guide supplémentaire pour le tourillon sphérique (3).

13. Joint à rotule selon l'une quelconque des revendications précédentes,
**caractérisé par** un mécanisme de verrouillage au moyen duquel le tourillon sphérique (3) est ou peut être verrouillé dans des positions de fin de course de sa trajectoire de déplacement.

14. Joint à rotule selon l'une quelconque des revendications précédentes,
**caractérisé en ce que** la rotule d'articulation (2) présente au moins un alésage transversal (13) dans lequel est guidée de manière déplaçable au moins une rotule d'encliquetage (14) qui vient ou peut venir en prise dans un évidement d'encliquetage (15) dans le boîtier (4).

15. Joint à rotule selon la revendication 14,
**caractérisé en ce qu**'un alésage longitudinal (17) orienté perpendiculairement à l'alésage transversal (13) est prévu dans le tourillon sphérique (3), une goupille de déverrouillage (16) étant montée à ressort dans l'alésage longitudinal et pressant ou pouvant presser la rotule d'encliquetage (14) dans l'évidement d'encliquetage (15).

16. Joint à rotule selon l'une quelconque des revendications 13 à 15,
**caractérisé en ce qu**'un déverrouillage du tourillon sphérique peut avoir lieu au moyen d'un bouton, d'un câble Bowden, d'un système pneumatique, hydraulique ou d'un moteur électrique.
